Europäisches Patentamt

European Patent Office

Office européen des brevets

(19)

(11) Numéro de publication: **0 059 671**
**B1**

(12) ## FASCICULE DE BREVET EUROPEEN

(45) Date de publication du fascicule du brevet:
**12.09.84**

(51) Int. Cl.³: **A 01 D 51/00,** A 01 D 17/16

(21) Numéro de dépôt: **82400348.7**

(22) Date de dépôt: **02.03.82**

(54) **Dispositif combiné de chargement et de nettoyage de plantes, telles que, notamment, des betteraves.**

(30) Priorité: **04.03.81 FR 8104787**
**06.01.82 FR 8200328**

(43) Date de publication de la demande:
**08.09.82 Bulletin 82/36**

(45) Mention de la délivrance du brevet:
**12.09.84 Bulletin 84/37**

(84) Etats contractants désignés:
**AT BE CH DE FR GB IT LI LU NL SE**

(56) Documents cités:
**DE - C - 908 077**
**FR - A - 943 674**
**FR - A - 2 163 553**
**FR - A - 2 258 117**
**FR - A - 2 326 140**
**FR - A - 2 460 599**

(73) Titulaire: **Masse, Daniel, Vendelles, F-02490 Vermand**
**(Aisnes) (FR)**

(72) Inventeur: **Masse, Daniel, Vendelles, F-02490 Vermand**
**(Aisnes) (FR)**

(74) Mandataire: **Lepage, Jean-Pierre, c/o**
**BUGNION 23/25, rue N. Leblanc, F-59011 Lille Cedex -**
**(Nord) (FR)**

ACTORUM AG

## Description

L'invention est relative à un dispositif combiné de chargement et de nettoyage de plantes, telles que des betteraves fourragères, sucrières, des pommes de terre, etc.

Le dispositif selon l'invention est destiné à être placé sur une remorque et tiré, par exemple, par un tracteur agricole, ou à être associé à un dispositif par exemple d'arrachage des plantes.

Il existe actuellement de nombreux dispositifs qui permettent le ramassage et le nettoyage des plantes, toutefois, la plupart d'entre eux sont complexes et encombrants. En effet, les opérations de nettoyage et de levage des plantes sont distinctes l'une étant respectivement réalisée par l'intermédiaire d'une gouttière longitudinale et l'autre par l'intermédiaire d'un convoyeur à bande sans fin ou par une vis d'Archimède.

Parmi les dispositifs plus élaborés connus à l'heure actuelle, on peut citer l'utilisation d'une cage verticale composée de barreaux longitudinaux à l'intérieur de laquelle une vis d'Archimède est entraînée en rotation. La cage dispose d'ouvertures inférieure et supérieure appropriées qui servent respectivement à l'introduction des plantes et à leur éjection de la cage vers un élévateur qui acheminera les plantes vers une benne de stockage. Durant leur passage dans la cage, les plantes se déchargent de leur terre au contact des barreaux par friction. Ainsi, les opérations de chargement et de nettoyage des plantes sont combinées (FR-A No 2326140).

Malheureusement ce type de dispositif souffre notamment de deux inconvénients majeurs. D'une part, au niveau du ramassage proprement dit, les plantes sont déterrées par l'intermédiaire d'un soc et l'extrémité de la vis d'Archimède doit venir prélever les plantes au niveau du sol. Ce dispositif est insatisfaisant car en raison des irrégularités de planéité du sol, la vis prélève également de la terre qui vient s'agglutiner sur son extrémité et gêne ainsi le prélèvement des plantes. De plus, l'introduction des plantes sur la vis n'est pas favorisée et l'on peut assister à un phénomène d'encombrement dans la partie inférieure de la cage.

D'autre part, il s'est avéré que l'utilisation du dispositif pour ramasser par exemple les betteraves plantées dans des terrains gras ou boueux perdait en partie ses propriétés de nettoyage des betteraves par suite d'un encrassement de la cage. En effet, la terre relativement compacte et collante s'agglutine autour des barreaux et vient obstruer quelque peu l'intervalle situé entre ceux-ci, ce phénomène combiné à l'enveloppe de terre formée autour du barreau fait que le dispositif devient moins efficace.

Le dispositif précédent a été amélioré (FR-A No 2460599) en ce que le moyen de ramassage est un disque fixe placé à la base de la vis d'Archimède. Le prélèvement de terre est ainsi réduit, mais le phénomène de bourrage demeure et on a cherché à le pallier par la présence d'une vis à deux filets, ce qui ne résout le problème qu'en partie. Par ailleurs, il est connu de FR-A No 2258117, ayant trait aussi à une ramasseuse-chargeuse de betteraves, d'utiliser un disque rotatif comme moyen de ramassage des betteraves, mais la rotation du disque sert à transférer les plantes sur des roues-soleil disposées à l'arrière. Aucune combinaison avec une vis d'Archimède n'est envisagée.

Un but de la présente invention est de proposer un dispositif de chargement et de nettoyage des plantes qui soit combiné et tel que l'introduction des plantes sur la vis d'Archimède soit favorisée de façon à éviter toute accumulation du produit dans la partie inférieure de la vis.

Un autre but de la présente invention sera de proposer un dispositif présentant une cage composée de barreaux longitudinaux à l'intérieur de laquelle une vis d'Archimède est entraînée en rotation et qui présente des moyens de nettoyage de sa cage. Ainsi, les barreaux se verront débarrassés de la terre qui était agglutinée, ce qui améliorera leur efficacité de nettoyage.

D'autres buts et avantages de la présente invention apparaîtront au cours de la description qui va suivre, qui n'est cependant donnée qu'à titre indicatif et qui n'a pas pour but de la limiter.

Le dispositif combiné de chargement et de nettoyage des plantes telles que betteraves, pommes de terre, etc., depuis le sol, destiné à être remorqué par un tracteur, ledit dispositif étant constitué notamment par un châssis 1 monté sur des roues 3, qui supporte une cage cylindrique 5 de révolution et verticale, inclinable, formée de barreaux longitudinaux 7 disposés selon les génératrices de ladite cage cylindrique 5, cette dernière présentant deux ouvertures, dont l'une 19 disposée à la partie inférieure de la cage 5 est destinée à l'introduction des plantes dans la cage 5 et dont l'autre ouverture 23 disposée à la partie supérieure de la cage 5 sert à l'éjection des plantes hors de la cage 5, avec, en outre, une vis d'Archimède 11 animée en rotation et disposée dans la partie interne de la cage 5, coaxialement à celle-ci, et un moyen de ramassage et d'introduction des betteraves sur la vis, situé en dessous de celle-ci, caractérisé par le fait que ce moyen de ramassage comprend un disque 16 disposé dans le prolongement de la partie inférieure de la cage cylindrique 5, coaxialement à cette dernière, de telle sorte que l'extrémité inférieure de la vis d'Archimède 11 affleure la surface dudit disque, celui-ci étant entraîné en rotation, et que la partie avant du disque 16 par l'inclinaison légère de la cage est destinée à racler le sol pour y ramasser les plantes.

L'invention sera mieux comprise si l'on se réfère à la description ci-dessous, ainsi qu'aux dessins en annexe qui en font partie intégrante.

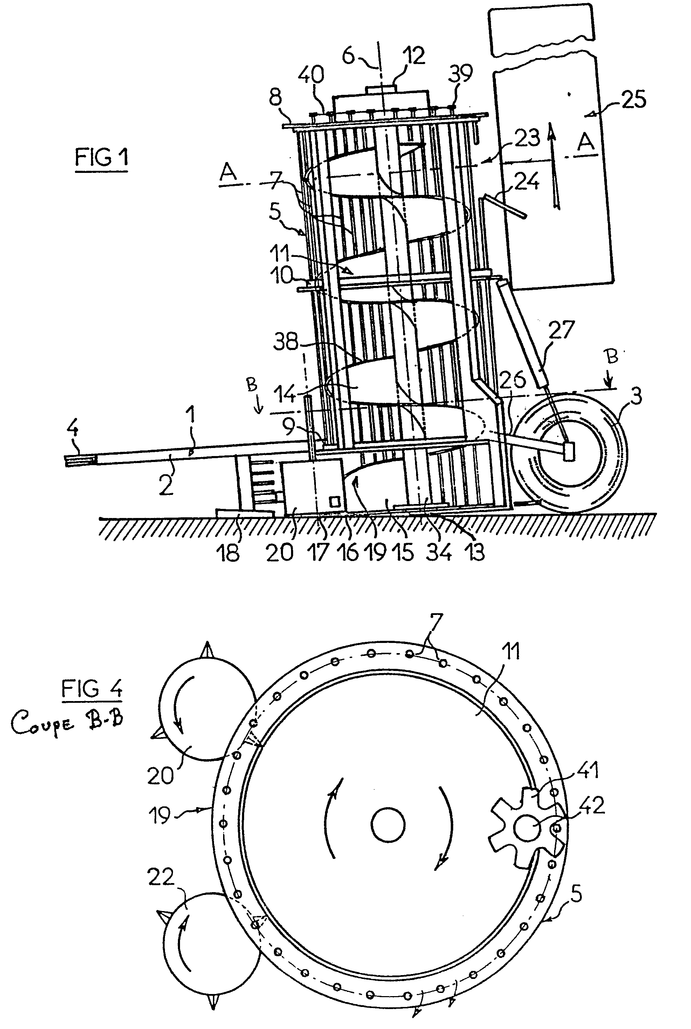

La fig. 1 schématise un dispositif selon une variante de l'invention, vu de côté, la cage ayant été partiellement ouverte;

la fig. 2 représente le dispositif de la fig. 1 vu de dessus selon la coupe A-A;

la fig. 3 est une vue partielle de face de la cage au niveau de son ouverture inférieure, et

la fig. 4 représente une vue de dessus du dispositif de la fig. 1 équipé des moyens de nettoyage selon une variante de l'invention, en coupe B-B.

Dans le mode préférentiel de réalisation choisi pour les figures, on a représenté le dispositif monté sur une remorque 1, apte à être tirée par exemple par un engin agricole, et comprenant un châssis 2 monté sur roues 3, en forme de timon dans sa partie avant terminé par un crochet 4. Ce mode de mise en œuvre de l'invention aurait pu également être associé à d'autres machines agricoles, telles qu'une arracheuse, etc.

Le dispositif comprend une cage 5 sensiblement verticale mais dont l'inclinaison est réglable. La cage 5, sensiblement cylindrique de révolution autour d'un axe 6, est composée de barreaux longitudinaux 7 selon ses génératrices. Cette pluralité de barreaux 7 pourra par exemple être de section cylindrique et ceux-ci seront maintenus espacés entre eux.

Les barreaux 7 pourront être reliés au niveau de leur partie supérieure de la cage 5 par une plaque circulaire 8 sur laquelle ils seront solidarisés et dans leur partie inférieure et éventuellement dans leur partie médiane respectivement par une pièce annulaire 9 et 10.

A l'intérieur de la cage 5 sera placée une vis d'Archimède 11 présentant le même axe de rotation 6, qui sera monté à chacune de ses extrémités sur des paliers 12 et 13 fixés par rapport à la cage 5.

Le filet helicoïdal 14 de la vis d'Archimède 11 aura de préférence un diamètre extérieur hors tout sensiblement égal au diamètre intérieur de la cage 5 définie par les barreaux 7.

La vis d'Archimède 11 sera entraînée en rotation par tout moyen approprié, dans un sens qui correspond à un mouvement ascensionnel.

La partie inférieure extrême 15 de la vis d'Archimède 11 sera sensiblement perpendiculaire à l'axe 6 de rotation et affleurera les moyens de chargement 16 qui, dans le cas préférentiel des figures, est un disque qui sera décrit ultérieurement. On équipera cette extrémité 15 de moyens appropriés tels qu'un élément d'usure démontable qui assurera une continuité aussi bonne que possible entre la surface du disque de chargement 16 et le filet hélicoïdal de la vis 11.

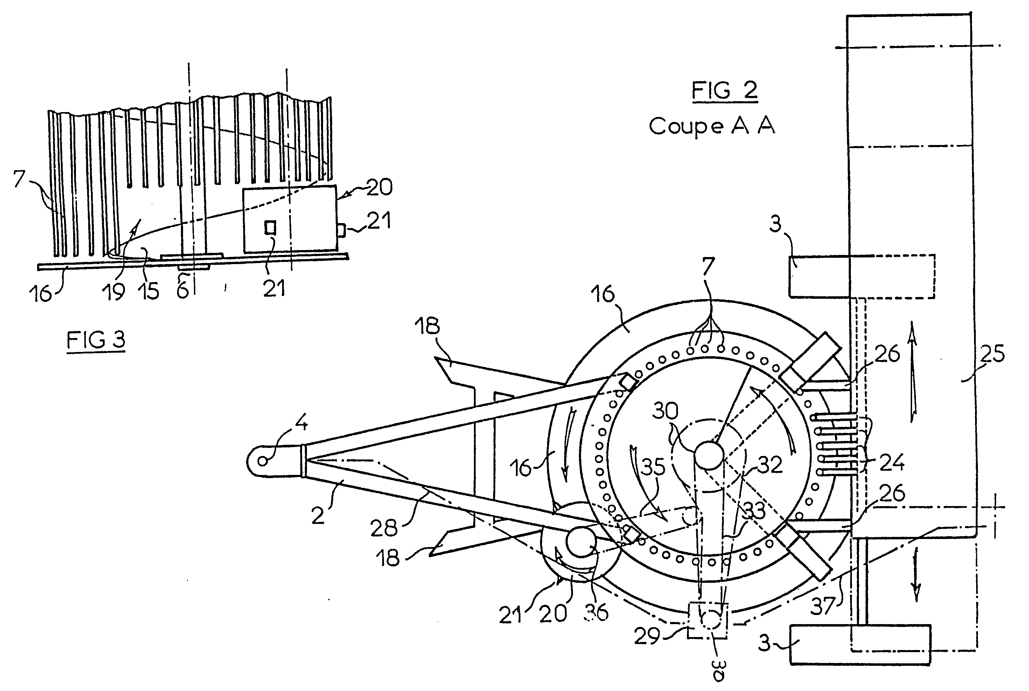

La cage 5 présente dans sa partie inférieure une ouverture 19, représentée à la fig. 3, par laquelle sont introduites les plantes. Dans le mode de réalisation choisi, cette ouverture 19 est orientée sensiblement en direction du timon 2, de manière que le déplacement du dispositif tende à faire pénétrer les plantes à l'intérieur de la cage.

Selon l'invention, le ramassage des plantes est réalisé par un disque 16 de diamètre égal ou de préférence supérieur à celui de la cage 5 et coaxial à l'axe 6. Le disque 16 sera situé dans le prolongement de la vis 11 dans sa partie inférieure, il sera entraîné en rotation par tout moyen approprié.

L'ensemble du dispositif pourra être incliné sur l'avant de manière que la partie avant extrême 17 du disque 16 affleure le sol ou pénètre légèrement dans celui-ci. De préférence, des patins de glissement 18, ou tout autre dispositif approprié, qui seront solidarisés au châssis 1 de la remorque, maintiennent sensiblement constante la position de la partie extrême avant 17 du disque par rapport au sol.

Le disque 16 pourra avoir une vitesse de rotation et un sens de rotation quelconques par rapport à ceux de la vis.

Les betteraves qui sont chargées et nettoyées par le présent dispositif ont été arrachées, effeuillées et de préférence sont regroupées en rangées de telle sorte que le présent dispositif chevauche et avale ces rangées au fur et à mesure de son avance. Des guides appropriés et par exemple combinés avec les patins de glissement 18 constituent un canal convergent vers la partie extrême avant 17 du disque 16 et permettent de resserrer les rangées de plantes et canalisent ces plantes vers le disque 16 en direction de l'ouverture 19.

En raison de la position rasante sinon raclante du disque par rapport au sol, et du fait de sa rotation, les plantes sont chargées sur ce disque 16.

Selon l'invention, le dispositif sera en outre équipé d'au moins un tambour 20 qui sera situé au niveau de l'extrémité latérale de l'ouverture 19 vers laquelle sont entraînées les plantes du fait de la rotation du disque 16. Ce tambour 20 sera sensiblement tangent à la vis d'Archimède 11 et chevauchera la périphérie du disque 16. Il sera animé d'un mouvement de rotation inverse à celui du disque 16, autour d'un axe sensiblement parallèle à l'axe 6.

De ce fait, le tambour 20 envoie les plantes vers l'intérieur de la cage 5 par l'ouverture 19, ces plantes qui sont chargées sur le disque 16 et entraînées dans son mouvement en rotation. L'action du tambour 20 pourra être accentuée en disposant des palettes 21 sur sa périphérie.

Eventuellement, un autre tambour 22, tel que représenté à la fig. 4, aurait pu être disposé au niveau de l'autre extrémité latérale de l'ouverture 19, avec une rotation telle qu'elle favorise également l'introduction des betteraves dans la cage 5.

Naturellement, le nombre et la position des palettes 21 ainsi que la vitesse de rotation du tambour 20 ou 22 sont déterminés de manière à être compatibles avec la rotation de la vis d'Archimède 11, c'est-à-dire de manière à éviter un accrochage éventuel entre les palettes 21 et le filet 14 de la vis 11.

Il sera préférable d'adopter une vitesse de rotation de la vis 11 supérieure à celle du disque 16 ou tout au moins inverse de façon que l'extrémité inférieure 15 de la vis 11 balaie la surface du disque 16 située à l'intérieur de la cage 5. De la sorte, les plantes se trouvant sur le disque 16 seront happées par la vis d'Archimède et portées par le filet hélicoïdal 14 jusque dans la partie supérieure de la vis 11.

Il faut remarquer que les betteraves sont freinées par les barreaux dans la cage contre lesquels elles sont projetées par la force centrifuge, ou par d'autres betteraves, elles-mêmes freinées par les barreaux. Ce freinage a pour effet de favoriser le mouvement ascensionnel et d'autre part de provoquer un frottement des betteraves contre les barreaux ou entre elles, ce qui favorise leur nettoyage et les débarrasse de la terre qui les entoure.

A titre d'exemple non limitatif, de bons résultats ont été obtenus avec une vis d'Archimède d'environ un mètre de diamètre, un pas de 0,70 m et entraînée selon une vitesse comprise entre 100 et 150 tr/min.

Par ailleurs, la partie inférieure 15 de la vis, en combinaison avec le tambour 20, réalise le nettoyage de la surface du disque 16, qui pourra éventuellement être munie sur sa périphérie d'une surface d'usure.

La partie supérieure de la cage 5 présente une ouverture 23 qui est destinée à l'éjection des plantes hors de la cage 5. Cette ouverture 23 sera de préférence orientée vers l'arrière du dispositif. Elle est naturellement dimensionnée de manière à permettre l'évacuation des betteraves et de préférence l'extrémité supérieure de la vis d'Archimède 11 sera sensiblement située au niveau de la partie médiane de cette ouverture 23.

De la sorte, les plantes qui arrivent dans la partie supérieure de la vis d'Archimède 11 seront évacuées via cette ouverture 23, par exemple vers un élévateur 25 du type connu tel qu'un convoyeur à bande sans fin qui dirigera les betteraves vers, par exemple, une remorque de stockage.

Un repliage approprié des barreaux 24 favorisera le guidage des plantes à la sortie 23 de la cage 5 vers le convoyeur 25.

En outre, l'essieu de support des roues 3 sera relié de préférence par des bras articulés 26 à la cage 5, ou à son châssis 1 et un vérin 27 permettra de régler l'inclinaison de l'axe 6 par rapport à la verticale, éventuellement en combinaison avec un dispositif d'attache réglable en hauteur de l'engin agricole qui tire le dispositif. Ce vérin 27 permet également de mettre le dispositif dans une position de route pour laquelle le disque 16 est ramené franchement au-dessus du niveau du sol, de façon à éviter tout contact entre ces derniers.

A titre d'exemple non limitatif, les transmissions permettant de réaliser les différents mouvements de rotation vont maintenant être décrites. Ces transmissions ont été schématisées en trait mixte dans la fig. 2. Elles se composent d'un bras télescopique 28 muni de cardans, qui assurent la liaison entre par exemple la prise de force du tracteur et une boîte de renvoi 29. Cette boîte de renvoi 29 peut être par exemple située sur le côté de la cage à mi-hauteur approximativement. Un axe sensiblement parallèle à l'axe 6 sort de cette boîte 29 vers le haut et comporte à sa partie supérieure des moyens tels que des roues dentées schématisées en 30 qui transmettent au moyen de chaînes 32 et 33 leur mouvement respectivement à la vis d'Archimède 11 et au disque 16. L'axe d'entraînement du disque 16 pourra par exemple traverser l'arbre central 34 creux de la vis 11 sur lequel est fixé le filet 14 et déboucher à chacune des extrémités supérieure et inférieure de cet arbre.

De manière à assurer la synchronisation entre le tambour 20 et la vis d'Archimède 11, une chaîne de transmission 35 prendra son mouvement sur la chaîne 32 de la vis et entraînera en rotation depuis la partie supérieure de la cage l'axe 36 du tambour 20.

Par ailleurs, éventuellement, un bras télescopique 37 muni de cardans prolongera le bras 28 depuis la boîte de renvoi 29 jusqu'à l'élévateur 25 pour assurer à ce dernier son mouvement.

Le dispositif selon l'invention pourra également être avantageusement doté de moyens de nettoyage de la cage 5.

Les moyens pourront par exemple se présenter sous la forme d'une mise en rotation des barreaux 7 de la cage 5 sur eux-mêmes autour de leur axe longitudinal. De la sorte, ils ne présenteront pas toujours la même face dirigée vers la vis 11 et cela évitera que la terre puisse s'agglutiner régulièrement dans l'intervalle séparant deux barreaux.

Il peut être envisagé de monter les barreaux libres en rotation ou de les entraîner.

Il sera en outre avantageux d'équiper par exemple la périphérie de la vis 11 au moins partiellement d'une lèvre souple 38 qui viendra en contact avec les barreaux 7. Cette lèvre 38 pourra par exemple être caoutchoutée. Ainsi, cette lèvre viendra périodiquement nettoyer la face interne de la cage 5 des mottes de terre qui auraient pu s'y agglutiner. Dans la mesure où les barreaux 7 de la cage 5 sont entraînés en rotation, l'action combinée de la lèvre 38 et de la rotation des barreaux permet de nettoyer ceux-ci intégralement sur toute leur périphérie. Dans la mesure où les barreaux sont libres en rotation, le contact de la lèvre 38 avec lesdits barreaux 7 permettra de les entraîner en rotation et, du fait du mouvement ascensionnel apparent du filet 14 de la vis 11, il se produira un nettoyage par frottement des barreaux 7.

Toutefois, il sera préférable d'assurer un entraînement relativement rapide des barreaux afin d'accélérer leur cadence de nettoyage. Il est possible d'envisager un sens de rotation quelconque pour chacun des barreaux par rapport à celui de la vis; toutefois, un meilleur résultat sera obtenu en utilisant un même sens de rotation. En effet, dans ce cas, le mouvement d'entraînement de la vis 11 pour les plantes sera contraire à la friction des barreaux, ce qui favorisera l'ascension des plantes.

Les barreaux pourront par exemple être montés à chacune de leurs extrémités sur des paliers qui les guideront en rotation et assureront leur position axiale. L'entraînement des barreaux 7 pourra par exemple être réalisé en fixant à leur partie supérieure des pignons dentés 39 solidaires à chacun des barreaux 7, l'ensemble des pignons 39 étant entraîné à l'aide d'une chaîne périphérique 40 à l'ensemble des pignons 39.

Généralement, l'encrassement des barreaux par de la terre est observé dans la partie inférieure de la cage 5. Il sera par conséquent parfois souhaitable d'équiper la vis 11 d'une roue dentée 41, telle qu'illustrée à la fig. 4 selon la coupe B-B. La roue dentée 41 sera libre en rotation autour d'un axe 42 coaxial à la cage 5 et fixé sur la face inférieure du filet 14 de la vis 11. La roue dentée 41 présentera des dents qui seront espacées selon le module des barreaux de la cage afin que cette roue 41 puisse s'engrener sur les barreaux 7 de la cage 5.

Pour n'entraîner aucune usure de la cage 5, et réduire les bruits de fonctionnement, il sera avantageux de choisir une roue dentée dans une matière élastique comme par exemple un composé caoutchouté. La roue dentée 41 sera avantageusement fixée sur la face inférieure du filet de la vis 11 et sa hauteur correspondra à la hauteur de nettoyage de la cage que l'on souhaite.

Généralement, la roue 41 sera placée au-dessus de la pièce annulaire 9 qui sert au positionnement des barreaux 7.

De la sorte, les dents de la roue dentée 41 viendront pousser la terre agglutinée entre deux barreaux régulièrement à l'extérieur de la cage de façon à débarrasser celle-ci. Il est possible de combiner l'action de la roue dentée 41 avec la rotation des barreaux.

Il est également possible de disposer plusieurs roues dentées à différents endroits de la vis. Toutefois, il sera avantageux de les disposer sur la face inférieure de la vis afin que les roues dentées ne gênent pas le passage des plantes.

Les barreaux situés sous l'ouverture 23 supérieure de la cage ne pourraient en aucun cas être entraînés par la chaîne périphérique 40, ils pourront rester libres en rotation ou être entraînés en rotation par des moyens extérieurs.

La description du présent dispositif n'est donnée qu'à titre indicatif, et l'on pourrait adopter d'autres mises en œuvre de la présente invention sans pour autant sortir du cadre de celle-ci, en particulier plusieurs barreaux pourraient être solidarisés à la cage pour lui donner une plus grande rigidité.

## Revendications

1. Dispositif combiné de chargement et de nettoyage des plantes telles que betteraves, pommes de terre, etc., depuis le sol, destiné à être remorqué par un tracteur, ledit dispositif étant constitué notamment par un châssis (1) monté sur roues (3), qui supporte une cage (5) cylindrique de révolution et verticale, inclinable, formée de barreaux (7) longitudinaux disposés selon les génératrices de ladite cage (5) cylindrique, cette dernière présentant deux ouvertures, dont l'une (19) disposée à la partie inférieure de la cage (5) est destinée à l'introduction des plantes dans la cage (5) et dont l'autre ouverture (23) disposée à la partie supérieure de la cage (5) sert à l'éjection des plantes hors de la cage (5), avec en outre, une vis d'Archimède (11) animée en rotation disposée dans la partie interne de la cage (5) coaxialement à celle-ci, et un moyen de ramassage et d'introduction des betteraves sur la vis, situé en dessous de celle-ci, caractérisé par le fait que ce moyen de ramassage comprend un disque (16) disposé dans le prolongement de la partie inférieure de la cage (5) cylindrique, coaxialement à cette dernière, de telle sorte que l'extrémité inférieure de la vis d'Archimède (11) affleure la surface dudit disque, celui-ci étant entraîné en rotation, et que la partie avant du disque (16) par l'inclinaison légère de la cage est destinée à racler le sol pour y ramasser les plantes.

2. Dispositif combiné de chargement et de nettoyage des plantes selon la revendication 1, caractérisé par le fait que les barreaux (7) longitudinaux de la cage (5) sont animés d'un mouvement de rotation sur eux-mêmes.

3. Dispositif combiné de chargement et de nettoyage des plantes selon la revendication 2, caractérisé par le fait que le mouvement de rotation des barreaux (7) sur eux-mêmes est réalisé au moyen d'une lèvre (38) souple, fixée sur la périphérie du filet hélicoïdal (14) de la vis d'Archimède (11) et qui vient en contact avec les barreaux (7).

4. Dispositif combiné de chargement et de nettoyage des plantes selon la revendication 1, caractérisé par le fait que la vis d'Archimède (11) présente sur la face inférieure de son filet (14) au moins une roue dentée (41) qui s'engrène sur les barreaux (7) longitudinaux de la cage (5).

5. Dispositif combiné de chargement et de nettoyage des plantes selon la revendication 1, caractérisé par le fait que les barreaux longitudinaux (7) de la cage (5) sont montés libres en rotation.

6. Dispositif combiné de chargement et de nettoyage des plantes selon la revendication 1, caractérisé par le fait que les barreaux longitudinaux (7) composant la cage (5) sont montés rotatifs dessus et présentent à leur partie supérieure un ensemble de pignons (39) solidaires des barreaux (7), lesdits pignons (39) étant entraînés en rotation par l'intermédiaire d'une chaîne périphérique (40).

## Patentansprüche

1. Kombinierte Vorrichtung zum Laden und Reinigen von Pflanzen, wie Rüben, Kartoffeln oder dergleichen, ab dem Boden, die von einem Traktor gezogen werden kann, aus insbesondere einem auf Rädern (5) montierten Rahmen (1), der einen vertikalen, neigbaren, zylindrischen Käfig (5) trägt, der aus Längsstäben (7) gebildet wird, die entsprechend den Mantellinien des besagten zylindrischen Käfigs (5) angeordnet sind, der zwei Öffnungen aufweist, von denen die eine (19), die in dem unteren Teil des Käfigs (5) angeordnet ist, für die Einbringung der Pflanzen in den Käfig (5) bestimmt ist, und die andere (23), die in dem oberen Teil des Käfigs (5) angeordnet ist, zum Auswerfen der Pflanzen aus dem Käfig (5) dient; aus ausserdem einer angetriebenen archimedischen Schraube (11), die innerhalb des Käfigs (5) koaxial zu diesem angeordnet ist, und einem Mittel zum Aufnehmen und Zuführen der Rüben zu der archimedischen Schraube (11), das unterhalb dieser angeordnet ist, dadurch gekennzeichnet, dass dieses Ausnahmemittel eine Scheibe (16) umfasst, die in der Verlängerung des unteren Teils des zylindrischen Käfigs (5) koaxial zu diesem angeordnet ist, wobei das untere Ende der archimedischen Schraube (11) an der besagten angetriebenen Scheibe (16) anliegt, und dass der vordere Teil der Scheibe (16) infolge der leichten Neigung des Käfigs (5) dazu bestimmt ist, über den Boden zu streichen, um die Pflanzen aufzunehmen.

2. Kombinierte Vorrichtung zum Laden und Reinigen von Pflanzen gemäss Anspruch 1, dadurch gekennzeichnet, dass die Längsstäbe (7) des Käfigs (5) in eine Drehung um sich selbst versetzt werden.

3. Kombinierte Vorrichtung zum Laden und Reinigen von Pflanzen gemäss Anspruch 2, dadurch gekennzeichnet, dass die Drehbewegung der Stäbe (7) um sich selbst mittels einer flexiblen Lippe (38) verwirklicht wird, die auf dem Umfang des Gewindes (14) der archimedischen Schraube (11) befestigt ist und die Stäbe (7) berührt.

4. Kombinierte Vorrichtung zum Laden und Reinigen von Pflanzen gemäss Anspruch 1, dadurch gekennzeichnet, dass die archimedische Schraube (11) auf der unteren Seite ihres Gewindes (14) mindestens ein Zahnrad (41) aufweist, das in die Längsstäbe (7) des Käfigs (5) eingreift.

5. Kombinierte Vorrichtung zum Laden und Reinigen von Pflanzen gemäss Anspruch 1, dadurch gekennzeichnet, dass die Längsstäbe (7) des Käfigs (5) frei drehbar montiert sind.

6. Kombinierte Vorrichtung zum Laden und Reinigen von Pflanzen gemäss Anspruch 1, dadurch gekennzeichnet, dass die Längsstäbe (7), aus denen der Käfig (5) besteht, oben antreibbar sind und in ihrem oberen Teil Ritzel (39) aufweisen, die mit den Stäben (7) fest verbunden sind, wobei die besagten Ritzel (39) mittels einer peripheren Kette (40) in Drehung versetzt werden.

## Claims

1. A combined device for the loading and cleaning of plants such as beets, potatoes or the like, from the ground, intended for being pulled by a tractor, said device being composed especially of a frame (1) mounted on wheels (3), which supports a vertical and inclinable cage (5) as a cylinder of revolution, provided with longitudinal bars (7) disposed according to the generating lines of said cylindrical cage (5), the latter having two apertures, whose one (19) made in the lower part of the cage (5) is intended for introducing the plants into the cage (5) and whose the other aperture (23) made in the upper part of the cage (5) is useful to the ejection of the plants out of the cage (5), with further an Archimedean screw moving in rotation, disposed in the internal part of the cage (5) coaxially to the latter and a means for the gathering and introduction of beets into the screw, situated underneath the latter, characterised in that this gathering means comprises a disc (16) disposed in the extension of the lower part of the cylindrical cage (5), coaxially to the latter, so that the lower end of the Archimedean screw (11) is flush with the surface of said disc, the latter being put in rotation, and that the front part of the disc (16), owing to the light inclination of the cage, is intended for scraping the ground in order to gather the plants.

2. A combined device for the loading and cleaning of plants according to claim 1, characterised in that the longitudinal bars (7) of the cage (5) revolve on themselves.

3. A combined device for the loading and cleaning of plants according to claim 2, characterised in that the rotation of the bars (7) on themselves is realized by means a flexible lip (38) fastened on the periphery of the helicoidal thread (14) of the Archimedean screw (11) and coming into contact with the bars (7).

4. A combined device for loading and cleaning of plants according to claim 1, characterised in that the Archimedean screw (11) comprises, on the lower face of its thread (14), at least a cog-wheel (41) which meshes the longitudinal bars (7) of the cage (5).

5. A combined device for the loading and cleaning of plants according to claim 1, characterised in that the longitudinal bars (7) of the cage (5) are mounted for freely revolving.

6. A combined device for the loading and cleaning of plants according to claim 1, characterised in that the longitudinal bars (7) forming the cage (5) are mounted for revolving at the top and exhibit, in their lower part, a set of pinions (39) which are integral with the bars (7), said pinions (39) being caused to rotate through a peripherical chain (40).

FIG 1

FIG 4
Coupe B-B

FIG 2
Coupe A A

FIG 3